(19) **Europäisches Patentamt / European Patent Office / Office européen des brevets**

(11) **EP 3 698 173 B1**

(12) **FASCICULE DE BREVET EUROPEEN**

(45) Date de publication et mention de la délivrance du brevet:
**26.07.2023 Bulletin 2023/30**

(21) Numéro de dépôt: **18826434.5**

(22) Date de dépôt: **06.12.2018**

(51) Classification Internationale des Brevets (IPC):
**G01S 19/50** *(2010.01)*   **G01S 19/11** *(2010.01)*

(52) Classification Coopérative des Brevets (CPC):
**G01S 19/11;** G01S 19/50; H01Q 13/203;
H01Q 25/00; H01Q 25/002

(86) Numéro de dépôt international:
**PCT/FR2018/053133**

(87) Numéro de publication internationale:
**WO 2019/110938 (13.06.2019 Gazette 2019/24)**

(54) **SYSTÈME DE POSITIONNEMENT AVEC MOYENS DE GÉNÉRATION DE SIGNAUX GNSS ET CÂBLE RAYONNANT**

POSITIONIERUNGSSYSTEM MIT GNSS-SIGNALERZEUGUNGSVORRICHTUNG UND ABSTRAHLENDEM KABEL

POSITIONING SYSTEM WITH GNSS SIGNAL GENERATION MEANS AND RADIATING CABLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.12.2017 FR 1761856**

(43) Date de publication de la demande:
**26.08.2020 Bulletin 2020/35**

(73) Titulaire: **Syntony**
**31300 Toulouse (FR)**

(72) Inventeurs:
• **GERNOT, Cyrille**
**31470 Ste Foy De Peyrolieres (FR)**
• **GERNOT, Florence**
**31470 Ste Foy De Peyrolieres (FR)**
• **PATOUT, Benjamin**
**31200 Toulouse (FR)**

(74) Mandataire: **Brevalex**
**56, Boulevard de l'Embouchure**
**B.P. 27519**
**31075 Toulouse Cedex 2 (FR)**

(56) Documents cités:
**US-A- 5 812 086     US-A1- 2006 208 946**
**US-A1- 2013 099 962**

• **COBB S: "Pseudolite Concepts for Deep Indoor Navigation", GNSS 2010 - PROCEEDINGS OF THE 23RD INTERNATIONAL TECHNICAL MEETING OF THE SATELLITE DIVISION OF THE INSTITUTE OF NAVIGATION (ION GNSS 2010), THE INSTITUTE OF NAVIGATION, 8551 RIXLEW LANE SUITE 360 MANASSAS, VA 20109, USA, 24 septembre 2010 (2010-09-24), pages 1724-1738, XP056000289,**
• **T Torlotin: "Control your Sky", EU-Japan GNSS Mîssion Tokyo 2017, 2 mai 2017 (2017-05-02), XP055506673, Extrait de l'Internet: URL:https://www.eu-japan.eu/sites/default/files/imce/06_syntony.pdf [extrait le 2018-09-12]**

**Description**

**DOMAINE TECHNIQUE**

La présente invention concerne de manière générale le domaine des systèmes de positionnement en intérieur (*indoor positioning*) ou des systèmes de positionnement en extérieur lorsque les conditions de réception des signaux de positionnement satellitaires sont dégradées.

**ÉTAT DE LA TECHNIQUE ANTÉRIEURE**

L'absence de signaux de positionnement satellitaires encore dénommés signaux GNSS (*Global Navigation Satellite System*) dans les environnements en intérieur (*indoor*) a conduit à développer des systèmes de positionnement spécifiques à ces derniers. Un grand nombre de techniques possibles ont été utilisées à cette fin. Par exemple, il est connu de déployer dans l'environnement en question des réseaux de balises permettant à un récepteur d'estimer sa position par TDOA (*Time Difference Of Arrival*) ou bien par triangulation à partir de temps d'arrivée, TOA (Time Of Arrival). Il est également possible d'utiliser des points d'accès existants, par exemple d'un réseau Wi-Fi pour déterminer la position d'un terminal à partir d'empreintes (*fingerprints*) de mesures de puissance (RSSI). Dans le cas particulier de l'intérieur d'un tunnel, il a été proposé dans la thèse de F.J. Leite Pereira intitulée « Positioning systems for underground tunnel environments » soutenue à l'Université de Porto, Janvier 2016, un système de positionnement par câble rayonnant (*leaky feeder*) dans lequel la position d'un terminal est déterminée à partir du niveau de puissance (RSSI) d'un signal GSM préalablement injecté à une extrémité du câble et reçu par le terminal. Ce système de positionnement présente deux inconvénients. Tout d'abord, il est relativement imprécis (car basé sur une mesure de puissance) même si cette précision peut être améliorée par des techniques de cartographie (*RSSI fingerprinting*) si l'environnement présente une dynamique de niveau RSSI suffisante. Ensuite et plus fondamentalement, il est affecté comme les autres systèmes de positionnement *indoor* précités d'une limitation majeure dans la mesure où il n'offre pas une solution de positionnement continue entre l'environnement *outdoor* et l'environnement *indoor.* Autrement dit, il nécessite le développement d'une application spécifique et le téléchargement par chaque usager de cette application sur son terminal (en général un *smartphone*).

Pour remédier à cette limitation, la société déposante a conçu et commercialisé un système de positionnement connu sous le nom de Subwave. Ce système de positionnement permet à tout utilisateur disposant d'un récepteur GPS de pouvoir se localiser dans un environnement intérieur tel qu'un métro sans avoir à souffrir d'une rupture de service lorsqu'il sort ou entre dans cet environnement. Le système de positionnement Subwave utilise un câble rayonnant et fait appel à un générateur de signaux GNSS, situé dans l'environnement intérieur et adapté à générer un ensemble de signaux GNSS tels qu'ils seraient reçus à l'extrémité du câble rayonnant dans une configuration à ciel ouvert. Ces signaux GNSS sont synchronisés à des signaux GNSS réels reçus dans l'environnement extérieur. Ce système est satisfaisant dans la mesure où il assure, du fait de cette synchronisation, une continuité de fonctionnement du positionnement entre intérieur et extérieur. Toutefois, il ne permet pas à un usager de se localiser le long du câble rayonnant. Autrement dit, un usager recevant les signaux GNSS d'un point quelconque du câble rayonnant voit sa position confondue avec celle de l'extrémité du câble rayonnant.

Une première approche pour obtenir une résolution spatiale le long du câble serait d'adopter la solution préconisée dans la thèse précitée, à savoir de déduire la position le long du câble de l'intensité du signal reçu. Cependant, cela nécessiterait l'installation d'une application spécifique sur le terminal de l'utilisateur. En outre, la mesure pourrait être entachée d'erreurs en raison de variations de puissance dues à des interférences, notamment entre signaux issus de différentes sections du câble.

Une autre approche consisterait à discrétiser le câble en sections indépendantes, un générateur GNSS au sens précité étant associé à chaque section et injectant les signaux GNSS correspondant à chaque section. Toutefois, cette discrétisation conduirait à multiplier les générateurs GNSS et donc le coût global du système. En outre, un tel système pourrait donner lieu à des interférences lorsque les sections en question sont trop rapprochées.

La demande US-A-2006/208946 décrit une méthode de positionnement le long d'un câble rayonnant dans laquelle des premiers et seconds signaux GNSS sont générés et respectivement injectés à une première et à une seconde extrémité du câble.

Un objet de la présente invention est par conséquent de proposer un système de positionnement le long d'au moins un câble rayonnant, dans un environnement *indoor* (ou un environnement *outdoor* dans lequel les conditions de réception sont dégradées), sans rupture de continuité de service (ou moyennant une discontinuité de service minime) avec un environnement *outdoor* et qui permette à un usager d'obtenir sa position le long dudit câble rayonnant avec une bonne précision.

## EXPOSÉ DE L'INVENTION

La présente invention est définie par un système de positionnement le long d'au moins un câble rayonnant, tel que précisé dans la revendication 1.

La présente invention concerne en outre une méthode de positionnement d'un récepteur le long d'au moins un câble rayonnant, telle que précisée dans la revendication 8.

Des modes de réalisation avantageux sont indiqués dans les revendications dépendantes

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

La Fig. 1 représente, de manière schématique, un système de positionnement le long d'un câble rayonnant selon un mode général de réalisation de l'invention ;
La Fig. 2 représente de manière schématique le principe de fonctionnement de l'invention ;
La Fig. 3 représente un exemple de sélection de satellites pour la génération des signaux GNSS dans le système de la Fig. 1 ;
La Fig. 4 représente de manière schématique la méthode de génération des premiers et seconds signaux GNSS dans les moyens de génération de la Fig. 1 ;
La Fig. 5A représente, de manière schématique, un système de positionnement le long d'un câble rayonnant, selon un premier mode particulier de réalisation de l'invention ;
La Fig. 5B représente, de manière schématique, un système de positionnement le long d'un câble rayonnant selon un second mode particulier de réalisation de l'invention ;
La Fig. 6 représente de manière schématique l'application de la présente invention à un câble rayonnant non rectiligne.

## EXPOSÉ DÉTAILLÉ DE MODES DE RÉALISATION PARTICULIERS

Nous considérerons dans la suite un environnement dans lequel la réception de signaux GNSS est dégradée ou absente, en particulier un environnement en milieu intérieur. Par signaux GNSS (*Global Navigation Satellite System*), nous entendons ici tout type de signaux satellitaires permettant un positionnement, quel que soit le système considéré (GPS, Galileo, GLONASS, Beidou, etc.) Les cas d'usage typiques mais non limitatifs de la présente invention sont entre autres les infrastructures ou bâtiments comportant des zones linéaires, tels que métros, tunnels ou mines par exemple.

On supposera qu'un câble rayonnant est disposé dans l'environnement en question. Par câble rayonnant (*leaky feeder*), on entend notamment un câble coaxial dont le conducteur extérieur présente des fentes ou des ouvertures à intervalles réguliers de manière à permettre une émission radiale sur toute sa longueur. Les pertes éventuelles le long du câble pourront être compensées en prévoyant des amplificateurs autant que nécessaire. De manière équivalente, on pourra utiliser tout guide d'ondes, à fentes ou à ouvertures, présentant une grande extension selon son axe longitudinal et permettant une émission radiale tout le long de cet axe. Le câble rayonnant n'est pas nécessairement linéaire, il peut présenter des portions courbes comme nous le verrons plus loin. Toutefois, dans un premier temps, dans un but de simplification de la présentation, nous supposerons que le câble rayonnant est rectiligne.

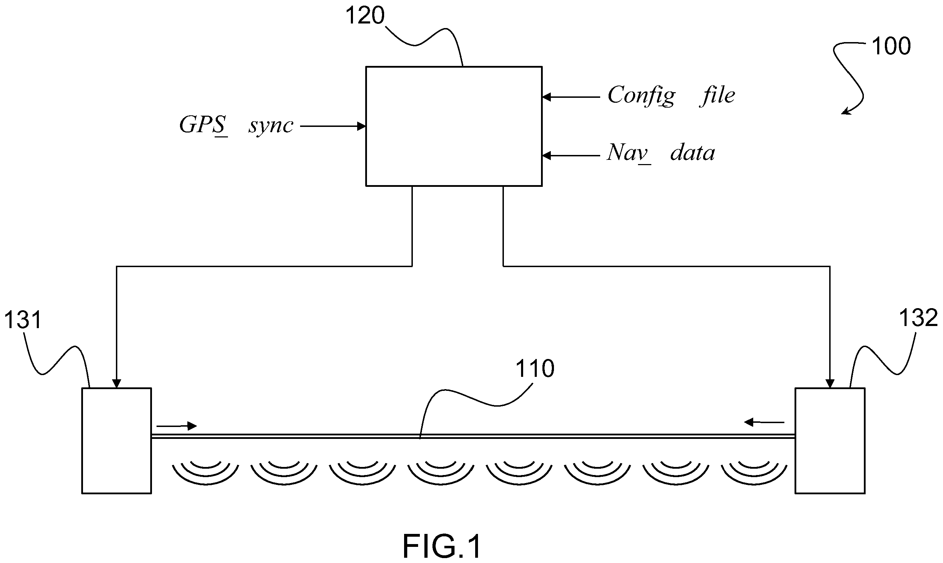

La Fig. 1 représente schématiquement un système de positionnement le long d'un câble rayonnant selon un mode général de réalisation de l'invention.

Le système, 100, comprend ledit câble rayonnant 110, des moyens de génération 120 de premiers signaux GNSS et de seconds signaux GNSS, des moyens d'injection des premiers signaux GNSS à une première extrémité du câble, 131, et des moyens d'injection des seconds signaux GNSS à une seconde extrémité du câble, 132.

Les moyens de génération reçoivent en entrée un fichier de configuration, *Config_file*, des données de navigation, *Nav_data,* des données d'une horloge à très faible gigue de phase (jitter), *GPS_sync.*

Le fichier de configuration peut être téléchargé à partir d'un serveur ou saisi via une interface HMI. Le fichier de configuration *Config _file* peut notamment comprendre :

- un masque de visibilité pour chacune des extrémités du câble, défini par une plage angulaire en élévation $[\alpha_{min}, \alpha_{max}]$ et, le cas échéant en azimut $[\beta_{min}, \beta_{max}]$, ces plage angulaires pouvant être différentes pour les deux extrémités ;
- les positions respectives des extrémités du câble ;
- les caractéristiques matérielles du câble à savoir notamment sa longueur, la vitesse de propagation des ondes électromagnétiques dans celui-ci (ou de manière équivalente la constante diélectrique de l'isolant présent entre le conducteur intérieur et le conducteur extérieur) ;

- le cas échéant, l'identification de la (ou des) constellation(s) satellitaire(s) utilisée(s).

En lieu et place des positions des extrémités du câble et des caractéristiques matérielles précitées, on pourra fournir directement la position des extrémités virtuelles du câble, comme définies plus loin.

Enfin, lorsque le générateur est distant des extrémités du câble, le fichier de configuration pourra contenir les offsets d'horloge correspondant aux temps de propagation des premiers et seconds signaux, respectivement à la première extrémité et la seconde extrémité du câble, de manière à les compenser lors de l'étape de génération.

Les données de navigation *Nav_data* comprennent notamment les paramètres d'éphémérides, les données d'almanachs, les conditions de propagation dans la ionosphère et les données de correction d'horloge des différents satellites. Ces données de navigation peuvent être fournies soit par un récepteur GNSS distant, qui les aura lui-même extrait des messages de navigation qu'il aura reçus, soient téléchargées via Internet.

Enfin, le signal de synchronisation externe *GPS_sync* peut être fourni via le réseau local au moyen d'un protocole de distribution d'horloges PTP (*Précision Time Protocol*) défini dans la norme IEEE 1588. Alternativement, le signal *GPS _sync* peut être un signal d'horloge calé sur le temps GNSS et fourni par un récepteur GNSS distant.

Les moyens de génération 120 fournissent des premiers signaux GNSS et des seconds signaux GNSS. Il est important de comprendre que les premiers et seconds signaux GNSS sont ici générés localement par simulation de propagation et non des signaux réels reçus de satellites.

Les premiers signaux GNSS sont générés de manière à ce que, à l'instant où ils sont injectés à la première extrémité du câble, ils soient identiques à ceux qui auraient été reçus en une première extrémité virtuelle (définie ci-après), dans des conditions de ciel ouvert, de la part d'un premier ensemble de satellites. Le premier ensemble de satellites est choisi parmi ceux de la ou des constellation(s) identifiée(s) dans le fichier de configuration appartenant à un premier cône de visibilité défini par un intervalle angulaire en élévation $[\alpha_{\min}, \alpha_{\max}]$ et un intervalle angulaire en azimut $[\beta_{\min}, \beta_{\max}]$, les angles étant définis ici à partir d'un axe dirigé de la seconde extrémité vers la première extrémité du câble. Le premier ensemble de satellites comprend au moins un tel satellite.

De même, les seconds signaux GNSS générés sont tels que, à l'instant où ils sont injectés à la seconde extrémité du câble, ils soient identiques à ceux qui auraient été reçus à la position d'une seconde extrémité (telle que définie ci-après), dans des conditions de ciel ouvert, de la part d'un second ensemble de satellites. Le second ensemble de satellites est choisi parmi ceux de la constellation identifiée dans le fichier de configuration appartenant à un second cône de visibilité défini par un intervalle angulaire en élévation $[\alpha_{\min}, \alpha_{\max}]$ et un intervalle angulaire en azimut $[\beta_{\min}, \beta_{\max}]$, les angles étant ici définis à partir d'un axe orienté de la première vers la seconde extrémité du câble. Le second ensemble de satellites comprend au moins un tel satellite.

En outre, l'union des premier et second ensembles de satellites doit comprendre au moins quatre satellites.

Enfin, avantageusement, la borne inférieure du premier/second cône de visibilité est choisie de manière à ce que ces cônes ne contiennent pas de satellite situé sous l'horizon du fait de la rejection de tels satellites par un récepteur classique. Les premier et second cônes de visibilité doivent être également choisis de manière à ce que leur intersection soit vide (c'est-à-dire de manière à ce que cette intersection ne contienne pas un satellite de la constellation identifiée dans le fichier de configuration).

Ainsi, pour un câble rayonnant horizontal, la borne inférieure du premier/ second cône de visibilité est telle que $\alpha_{\min} \geq 0°$, en pratique $\alpha_{\min} \geq 5°$ voire $\alpha_{\min} \geq 10°$. De même, la borne supérieure du premier/ second cône de visibilité est telle que $\alpha_{\max} < 90°$. Elle est préférentiellement choisie inférieure à 60°, voire 30°.

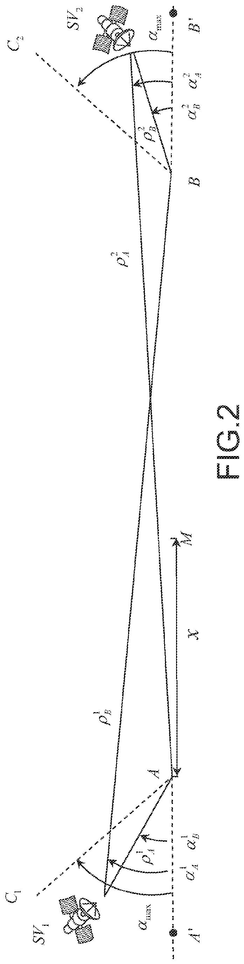

La Fig. 2 illustre de manière schématique le principe de fonctionnement de l'invention.

Le principe de fonctionnement a été illustré ici dans le plan d'élévation mais s'applique bien entendu au cas général.

Le câble rayonnant, supposé rectiligne, est représenté par le segment de droite [AB] où *A* et *B* sont les extrémités du câble. Les premier et second cônes de visibilité ont été représentés en $C_1$ et $C_2$, ainsi qu'un premier satellite $SV_1$ appartenant à $C_1$ et un second satellite $SV_2$ appartenant au second cône de visibilité. Les distances séparant le satellite $SV_1$ (resp. $SV_2$) des extrémités *A* et *B* du câble sont notées $\rho_A^1$ et $\rho_B^1$ (resp. $\rho_A^2$ et $\rho_B^2$). De même, les angles d'élévation sous lesquels est vu le satellite $SV_1$ (resp. $SV_2$) à partir des extrémités A et B du câble sont notées $\alpha_A^1$ et $\alpha_B^1$ (resp. $\alpha_A^2$ et $\alpha_B^2$). On a supposé ici que $\alpha_{\min} = 0$.

Si l'on considère maintenant un usager équipé d'un récepteur situé au point *A*, et si l'on note $\hat{\rho}_A^2$ la pseudo-distance du récepteur au satellite $SV_2$, estimée par le récepteur, on a :

$$\hat{\rho}_A^2 = \rho_B^2 + L + \delta \tag{1}$$

où $L = \ell \dfrac{c}{v}$ est la longueur apparente du câble, $\ell$ est sa longueur réelle, $c$ est la vitesse de la lumière dans le vide, $v$ est la vitesse de propagation d'une onde électromagnétique dans le câble et $\delta$ est la distance équivalente à l'offset d'horloge.

Par ailleurs, on a par simple relation trigonométrique :

$$\rho_A^2 = \frac{\ell + \rho_B^2 \cos \alpha_B^2}{\cos \alpha_A^2} \tag{2}$$

Si le cône de visibilité $C_1$ présente un faible angle d'ouverture $\alpha_{\max} - \alpha_{\min}$ en élévation, $\cos \alpha_B^2 \approx 1$ et $\cos \alpha_A^2 \approx 1$, on a :

$$\rho_A^2 \approx \ell + \rho_B^2 \tag{3}$$

d'où :

$$\hat{\rho}_A^2 - \rho_A^2 = \ell.\left(\frac{c}{v} - 1\right) + \delta \tag{4-1}$$

et, de manière similaire, lorsque l'usager est situé au point B, $\rho_B^1 \approx \ell + \rho_A^1$ et :

$$\hat{\rho}_B^1 - \rho_B^1 = \ell.\left(\frac{c}{v} - 1\right) + \delta \tag{4-2}$$

Si l'on considère maintenant un usager situé en un point M d'abscisse x sur l'axe AB en prenant A comme origine, on a :

$$\hat{\rho}_M^1 - \rho_M^1 = x.\left(\frac{c}{v} - 1\right) + \delta \tag{5-1}$$

$$\hat{\rho}_M^2 - \rho_M^2 = (\ell - x).\left(\frac{c}{v} - 1\right) + \delta \tag{5-2}$$

soit, encore, en effectuant le changement d'échelle $X = x \dfrac{c}{v}$ et $L = \ell \dfrac{c}{v}$ :

$$\hat{\rho}_M^1 = \rho_A^1 + x + x.\left(\frac{c}{v} - 1\right) + \delta = \rho_A^1 + X + \delta \tag{6-1}$$

$$\hat{\rho}_M^2 = \rho_B^2 + (\ell - x).\left(\frac{c}{v}\right) + \delta = \rho_B^2 + (L - X) + \delta \qquad (6\text{-}2)$$

De manière à éliminer l'écart de vitesse de propagation dans l'espace libre et dans le câble, on injecte à l'extrémité $B$ du câble le signal qui aurait été reçu du satellite $SV_2$ en une extrémité virtuelle $B'$ située sur un prolongement virtuel du câble, du côté de l'extrémité $B$ à une distance $\Delta_B$ de cette dernière. De même, on injecte à l'extrémité $A$ du câble le signal qui aurait été reçu du satellite $SV_1$ en une extrémité virtuelle $A'$ située sur un prolongement virtuel du câble, du côté de l'extrémité $A$ à une distance $\Delta_A$ de cette dernière. Les distances $\Delta_A$ et $\Delta_B$ sont choisies telles que

$$\Delta_A = \Delta_B = \Delta = \frac{L - \ell}{2}$$

. Dans ce cas, les équations (6-1) et (6-2) deviennent :

$$\hat{\rho}_M^1 - \rho_M^1 = \left(x - \frac{\ell}{2}\right)\left(\frac{c}{v} - 1\right) + \delta \qquad (7\text{-}1)$$

$$\hat{\rho}_M^2 - \rho_M^2 = \left(\frac{\ell}{2} - x\right).\left(\frac{c}{v} - 1\right) + \delta \qquad (7\text{-}2)$$

soit, avec le changement d'échelle :

$$\hat{\rho}_M^1 = \rho_A^1 - \frac{L - \ell}{2} + X + \delta = \rho_{A'}^1 + X + \delta \qquad (8\text{-}1)$$

$$\hat{\rho}_M^2 = \rho_B^2 + \frac{L + \ell}{2} - X + \delta = \rho_{A'}^2 - X + \delta \qquad (8\text{-}2)$$

Différents modes de réalisation du récepteur sont envisageables.

Dans un premier mode de réalisation, le récepteur ne possède pas de couche applicative au-dessus de la couche GPS. Le calcul de position réalisé par le récepteur est alors identique à un calcul de position en extérieur (qui demande alors au moins 4 satellites). Ce calcul fournira une estimation de la position $X$ du point $M$ le long du câble par élimination de l'offset $\delta$ entre les pseudo-distances. Cette estimation est exacte lorsque le point $M$ se trouve au milieu

(x = $\ell$/2, cf. équations (7-1) et (7-2)). L'erreurcroit ensuite de manière symétrique pour atteindre $\dfrac{L - \ell}{2}$ en valeur absolue aux extrémités du câble.

Dans un second mode de réalisation, le récepteur possède une couche applicative au-dessus de la couche GPS, effectuant la conversion $x = \dfrac{v}{c}.X$. Dans ce mode de réalisation, le récepteur connaît la vitesse de propagation dans le câble ainsi que les positions des extrémités du câble (ou de ses extrémités virtuelles).

On notera que si le premier ensemble et/ou le second ensemble de satellites sélectionnés contient plus d'un satellite, la précision de la position s'en trouve améliorée en raison de la redondance des mesures.

En outre, quel que soit le mode de réalisation, lorsque l'union des premier et second ensembles contient au moins quatre satellites, le récepteur pourra déterminer exactement sa position pour autant qu'il soit à proximité immédiate du câble rayonnant.

Il convient de noter que lorsque le point $M$ n'est pas situé à proximité immédiate du câble rayonnant, la position déterminée par le récepteur à partir des premiers et seconds signaux GNSS correspond à la projection de ce point sur le câble en question. En effet, le trajet radial de propagation entre le câble et le récepteur est commun aux premiers et seconds signaux GNSS. Il ne peut donc effectuer une discrimination spatiale sur le trajet radial : le temps de propagation entre le câble et le récepteur est considéré comme un offset commun et est éliminé comme offset d'horloge récepteur dans le calcul de position.

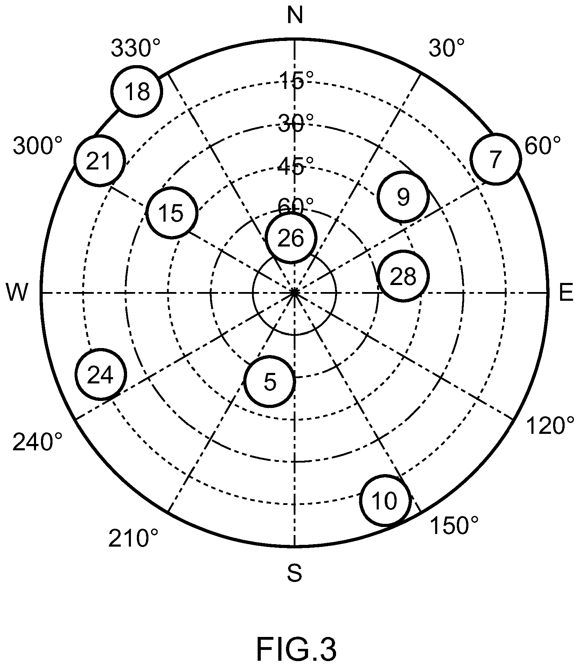

La Fig. 3 illustre un exemple de sélection de satellites pour la génération de signaux GNSS dans les moyens de génération de la Fig. 1.

Dans cet exemple une seule constellation satellitaire a été représentée. Les satellites ont été identifiés par les numéros des séquences pseudo-aléatoires qu'ils génèrent.

La direction dans le plan de la figure donne l'angle d'azimut, le nord (N) en haut de la figure correspondant au 0° azimut et l'angle étant mesuré en degrés dans le sens horaire à partir de cette origine. Le cercle extérieur correspond à 0° degré d'élévation et donc à un satellite situé sur l'horizon. Le point central correspond à une élévation de 90° et donc à un satellite se trouvant au zénith.

Si l'on suppose maintenant que le câble rayonnant est orienté Est-Ouest, avec l'extrémité *A* à l'Ouest et l'extrémité *B* à l'Est, le premier ensemble de satellites peut être constitué par les satellites portant les numéros 15, 21,24. De manière similaire, le second ensemble de satellites peut être constitué par les satellites portant les numéros 28 et 7.

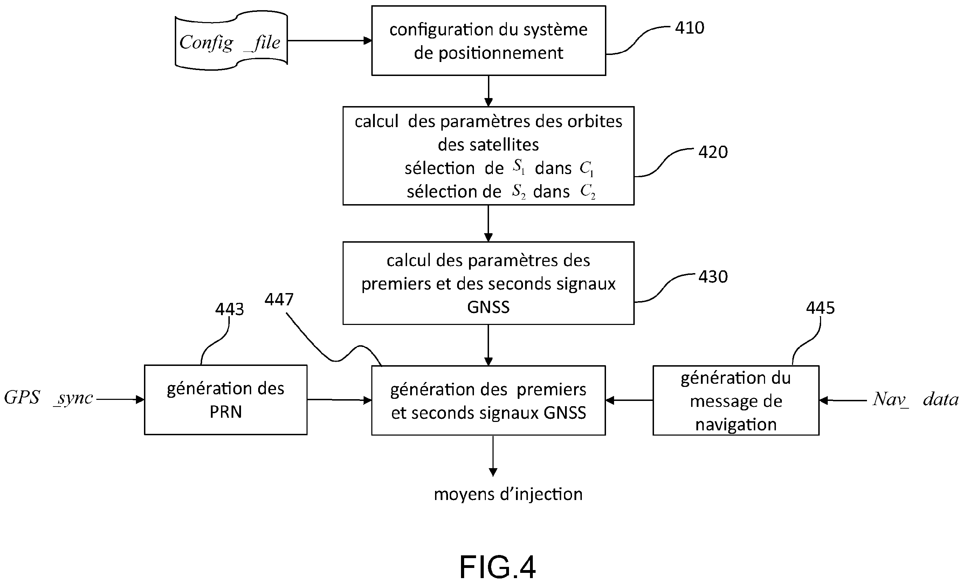

La Fig. 4 illustre de manière schématique la méthode de génération des premiers et seconds signaux GNSS par les moyens de génération de la Fig. 1.

A l'étape 410, les moyens de génération récupèrent le fichier de configuration, soit par une saisie via l'interface HMI soit par téléchargement de fichier à partir d'un serveur distant. Le fichier de configuration permet de configurer le système de positionnement comme indiqué précédemment.

A l'étape 420, les moyens de génération calculent les paramètres des orbites des satellites identifiés dans le fichier de configuration et en déduisent les positions et vitesses respectives des satellites. Les moyens de génération sélectionnent ensuite un premier ensemble (non vide) de satellites appartenant au premier cône de visibilité et un second ensemble (non vide) de satellites appartenant au second cône de visibilité.

A l'étape 430, les moyens de génération déterminent les paramètres des premiers et seconds signaux GNSS relatifs respectivement au premier ensemble et au second ensemble de satellites. Parmi les paramètres des premiers signaux GNSS figurent notamment l'intensité des signaux qui seraient reçus au premier point d'injection des satellites du premier ensemble, la fréquence de ces signaux, les décalages Doppler de ces signaux (en raison des vitesses de déplacement des satellites par rapport au point d'injection), les décalages temporels de ces signaux représentant les temps de propagation entre lesdits satellites et les extrémités virtuelles, tenant compte des erreurs d'horloge respectives des satellites. Les paramètres des seconds signaux GNSS sont déterminés de manière similaire.

Enfin, à l'étape 447, les moyens de génération génèrent les premiers et les seconds signaux GNSS proprement dits.

Pour ce faire, en 443, les séquences pseudo-aléatoires (PRN) des satellites appartenant aux premier et second ensembles sont tout d'abord générées en se calant sur le signal de synchronisation *GPS _sync* et en prenant en compte le temps de trajet satellite-récepteur ainsi que les erreurs d'horloge des satellites et les décalages associés à la distance de génération à l'extrémité du câble.

Ces séquences PRN sont combinées en 445 aux bits des messages de navigation, les messages de navigation étant eux-mêmes construits à partir des données *Nav_data* des satellites des premier et second ensembles, émises de manière synchrone avec les séquences PRN. Les données *Nav_data* sont téléchargées d'un serveur via Internet ou bien reçues d'un récepteur GNSS distant.

Les séquences PRN des différents satellites, combinées aux bits des messages de navigation modulent les porteuses (par ex L1, L2) pour générer les signaux GNSS, de manière connue en soi.

Ainsi par exemple, dans le cas d'un signal GPS, le signal sur la voie I de la porteuse L1, correspondant au code C/A est obtenu au moyen de :

$$s_{C/A}(t) = \sqrt{P_{C/A}(t)}(d_{C/A}(t - \tau_{C/A}) \oplus c_{C/A}(t - \tau_{C/A})).\cos\left(2\pi\left(f_{L1} + f_{Dop}\right)t + \Phi_{C/A}\right)$$

$$(9)$$

où $P_{C/A}(t)$ est la puissance sur la voie I qui serait reçue au point d'injection, $\tau_{C/A}$ est le délai du code PRN, $d_{C/A}(t-\tau_{C/A})$ est le bit de message de navigation , $c_{C/A}(t-\tau_{C/A})$ est le chip du code PRN, $f_{L1}$ est la fréquence de la porteuse L1, $f_{Dop}$ est le décalage Doppler qui l'affecte compte tenu de la vitesse du satellite/ point d'injection et $\Phi_{C/A}$ est la phase de la porteuse au moment où le signal est reçu par le point d'injection.

Les signaux L1 P(Y), sur la voie en quadrature de la porteuse L1, et L2 P(Y) sur la porteuse L2 sont générés de manière similaire.

De manière similaire, d'autres signaux GNSS peuvent être générés pour d'autres constellations, de manière connue de l'homme du métier.

Les signaux GNSS générés à l'étape 447 sont ensuite fournis aux modules d'injection 131-132.

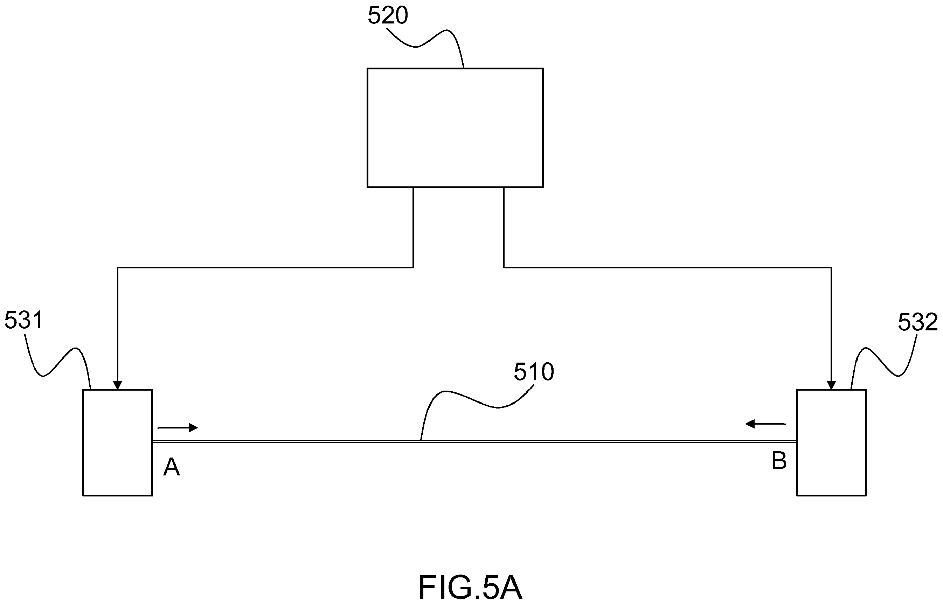

La Fig. 5A représente, de manière schématique, un système de positionnement le long d'un câble rayonnant, selon un premier mode particulier de réalisation de l'invention.

Dans ce mode de réalisation, les moyens de génération, 520, fournissent les premiers signaux GNSS aux premiers moyens d'injection 531 situés à une première extrémité *A* du câble rayonnant 520 et les seconds signaux GNSS aux seconds moyens d'injection 532 situés à une seconde extrémité *B* du câble rayonnant. Les premiers signaux GNSS sont injectés au point *A,* se propagent de *A* vers *B* et sont émis radialement par le câble rayonnant sur toute sa longueur. De même, les seconds signaux GNSS sont injectés au point *B,* se propagent de *B* vers *A* et sont émis radialement par le câble rayonnant sur toute sa longueur. De préférence, les premiers (resp. les seconds) moyens d'injection comprennent un coupleur directionnel dont l'entrée est connectée aux moyens de génération, la première sortie est connectée à l'extrémité du câble coaxial et la seconde sortie est fermée sur une charge adaptée (impédance caractéristique du câble). On évite les réflexions multiples des signaux GNSS aux extrémités du câble rayonnant. Le cas échéant, si le câble rayonnant est très long, on pourra prévoir un amplificateur bidirectionnel au milieu du câble afin de compenser les pertes par rayonnement.

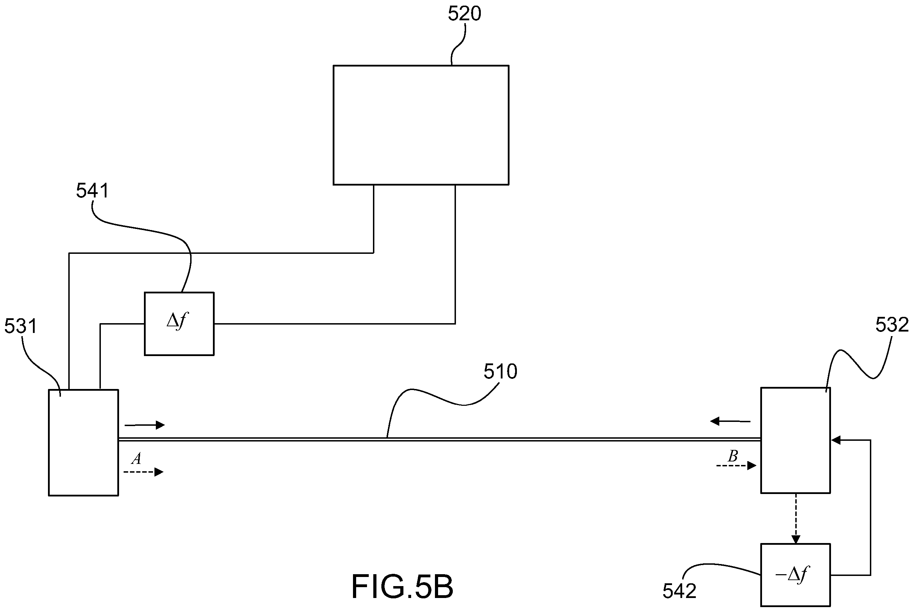

La Fig. 5B représente, de manière schématique, un système de positionnement le long d'un câble selon un second mode particulier de réalisation de l'invention.

Dans ce second mode de réalisation, les seconds signaux GNSS fournis par les moyens de génération sont décalés en fréquence de Δ*f* dans un premier module de translation de fréquence 541, pour obtenir des signaux GNSS intermédiaires. De manière équivalente, les seconds signaux GNSS seront décalés en fréquence dès leur génération (étape 447, Fig. 4). Les premiers moyens d'injection injectent alors dans le câble rayonnant, outre les premiers signaux GNSS, les signaux GNSS intermédiaires.

Le décalage en fréquence Δ*f* est choisi de sorte que les signaux GNSS intermédiaires soient hors bande du récepteur GNSS. Préférablement, la bande spectrale des signaux GNSS intermédiaires est située au-delà de la fréquence de coupure des fentes, de manière à limiter les pertes par radiation lors de leur propagation vers la seconde extrémité.

A la seconde extrémité, les signaux intermédiaires subissent un décalage inverse de fréquence, -Δ*f*, dans un second module de translation de fréquence 542 de sorte à régénérer les seconds signaux GNSS. Ces seconds signaux ainsi ramenés en bande initiale sont ensuite réinjectés à la seconde extrémité *B* du câble rayonnant pour se propager en direction de la première extrémité. Les premiers signaux sont également décalés en fréquence de -Δ*f* et se situent, lors de leur retour, hors de la bande de réception voire de la bande radiative des fentes.

L'homme du métier comprendra que le second mode de réalisation est avantageux au sens où le câble rayonnant sert lui-même à l'acheminement des signaux GNSS à l'extrémité distante. Qui plus est, dans certains cas, le câble rayonnant peut servir également au transport d'une tension DC pour alimenter le module de translation de fréquence 542. Il ne sera donc pas nécessaire de prévoir une alimentation aux deux extrémités du câble rayonnant.

On notera que dans le second mode de réalisation comme dans le premier, le point d'injection effectif des seconds signaux GNSS est bien situé à la seconde extrémité du câble, l'injection à la première extrémité ne concernant que les premiers signaux GNSS et les signaux GNSS intermédiaires.

Quel que soit le mode de réalisation, on pourra utiliser la phase des signaux injectés pour affiner la précision de la position estimée, comme dans un récepteur GNSS conventionnel.

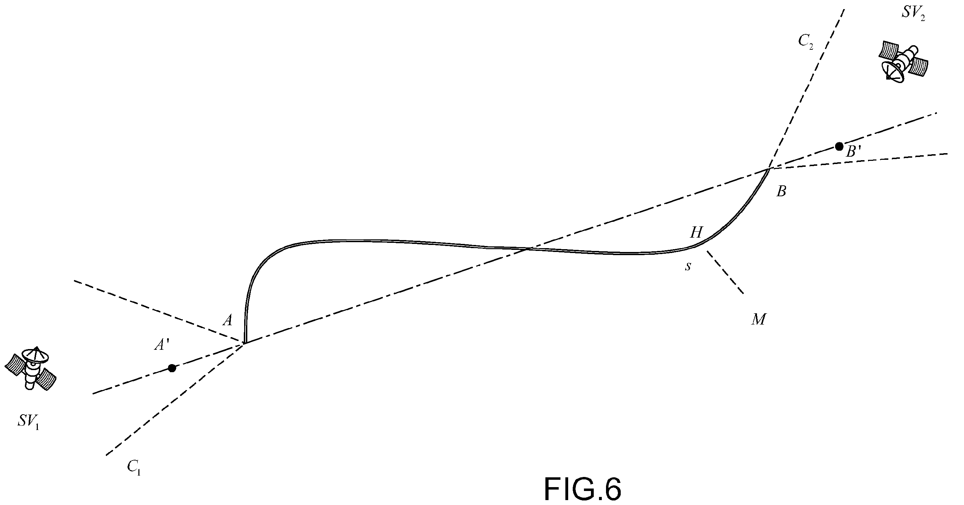

On a supposé jusqu'à présent que le câble rayonnant était rectiligne. Toutefois, l'homme du métier comprendra que l'invention pourra également s'appliquer à un câble rayonnant de forme quelconque, comme représenté en Fig. 6.

De même que précédemment, l'injection des premiers signaux GNSS se fait à une première extrémité du câble rayonnant et celle des seconds signaux GNSS se fait à la seconde extrémité du câble rayonnant. Les premiers signaux GNSS sont ceux qui seraient captés par une première extrémité virtuelle du câble, *A',* dans un cône de visibilité autour d'un axe reliant les deux extrémités *A* et *B* et dirigé du côté opposé à *B.* Comme dans le cas d'un câble rectiligne, la première extrémité virtuelle *A'* est située sur l'axe AB, au-delà du point *A* dans la direction opposée à *B* et à la distance Δ de ce dernier. De manière similaire, les seconds signaux GNSS sont ceux qui seraient captés par une seconde extrémité virtuelle du câble, *B',* dans un cône de visibilité autour d'un axe reliant les deux extrémités *A* et *B* et dirigé du côté opposé à *A.* La seconde extrémité virtuelle *B'* est située sur l'axe AB, au-delà du point *B* dans la direction opposée à *A* et à une distance Δ de ce dernier,

Les cônes de visibilité sont choisis de manière à ce que leur intersection soit vide, pour permettre la discrimination spatiale le long du câble.

La position estimée par le récepteur GNSS correspond alors à la projection *H* du point *M* où se trouve le récepteur GNSS sur la courbe formée par le câble. Plus précisément, le récepteur peut déterminer l'abscisse curviligne de *H* à l'aide des expressions (8-1),(8-2), à partir des pseudo-distances $\hat{\rho}_M^1$ et $\hat{\rho}_M^2$, en remplaçant $X = \dfrac{c}{v}x$ par

$S = \dfrac{c}{v}s$ où *s* est l'abscisse curviligne de *H* . Si le récepteur dispose d'une description de la courbe, il pourra déterminer sa position. Toutefois, la prise en compte de la description de la courbe nécessite l'introduction d'une couche supplémentaire capable de lier l'abscisse curviligne à la position du récepteur dans l'espace.

Un cas particulier est constitué par un câble rayonnant, en forme de cercle ouvert, permettant d'injecter en une première extrémité les premiers signaux GNSS se propageant de manière horaire et à une seconde extrémité les signaux GNSS se propageant de manière antihoraire.

Enfin, le système de positionnement selon l'invention peut comprendre une pluralité de câbles rayonnants, orientés selon des axes non coplanaires, avantageusement orthogonaux (pour une résolution dans l'espace) et non parallèles, avantageusement orthogonaux (pour une résolution dans un plan). Chaque câble rayonnant est associé à des premiers signaux GNSS injectés à sa première extrémité et des seconds signaux GNSS injectés à sa seconde extrémité, les premiers (resp. les seconds) signaux GNSS associés à un câble étant ceux qui auraient été reçus à sa première (resp. seconde) extrémité en situation de ciel ouvert. Ce système permet de déterminer la position du récepteur selon plusieurs axes non-coplanaires (au moins trois) et d'en déduire sa position dans l'espace.

**Revendications**

1. Système de positionnement le long d'au moins un câble rayonnant, ledit système (100) étant **caractérisé en ce qu'**il comprend, outre ledit câble rayonnant (110,510) :

   - des moyens de génération (120,520) de premiers et de seconds signaux GNSS, les premiers signaux GNSS étant définis comme ceux qui seraient reçus au même instant en un premier point ($A'$) dans une configuration de ciel ouvert, d'un premier ensemble ($S_1$) de satellites visibles d'une première extrémité du câble dans un premier cône de visibilité ($C_1$) autour d'un axe reliant les première et seconde extrémités du câble et dirigé vers le côté opposé à la seconde extrémité, les seconds signaux GNSS étant définis comme ceux qui seraient reçus au même instant, en un second point ($B'$) dans une configuration de ciel ouvert, d'un second ensemble ($S_2$) de satellites visibles de la seconde extrémité du câble dans un second cône de visibilité ($C_2$) autour dudit axe et dirigé vers le côté opposé à la première extrémité, les premier et second cônes de visibilité ayant une intersection vide, lesdits premier et second ensembles de satellites étant non-vides, le premier point étant situé sur ledit axe, au-delà de la première extrémité et à une distance $\Delta$ de celle-ci, dans la direction opposée à la seconde extrémité, le second point étant situé sur ledit axe, au-delà de la seconde extrémité et à la distance $\Delta$ de celle-

   $$\Delta = \frac{\ell}{2}\left(\frac{c}{v} - 1\right)$$

   ci, dans la direction opposée à la première extrémité, avec     où $\ell$ est la longueur du câble rayonnant, $v$ et $c$ sont respectivement la vitesse de propagation des ondes électromagnétiques dans le câble rayonnant et dans le vide ;
   - des premiers moyens d'injection (531) pour injecter les premiers signaux GNSS à la première extrémité du câble rayonnant ;
   - des seconds moyens d'injection (532) pour injecter les seconds signaux GNSS à la seconde extrémité du câble rayonnant.

2. Système de positionnement le long d'au moins un câble rayonnant selon la revendication 1, caractérisé en qu'il comprend en outre des premiers moyens de translation de fréquence (541) adaptés à translater en fréquence les seconds signaux GNSS d'un premier décalage en fréquence pour fournir des signaux GNSS intermédiaires, les signaux intermédiaires étant injectés avec les premiers signaux GNSS par les premiers moyens d'injection et se propageant de la première à la seconde extrémité du câble, le système de positionnement comprenant en outre des seconds moyens de translation (542) de fréquence adaptés à translater en fréquence les signaux GNSS intermédiaire d'un second décalage en fréquence, inverse du premier, de manière à régénérer les seconds signaux GNSS et les fournir aux seconds moyens d'injection.

3. Système de positionnement le long d'au moins un câble selon la revendication 2, **caractérisé en ce que** le décalage en fréquence est choisi de sorte à ce que les signaux GNSS intermédiaires soient hors bande de rayonnement dudit câble.

4. Système de positionnement le long d'au moins un câble selon la revendication 2, **caractérisé en ce que** le décalage en fréquence est choisi de sorte à ce que les signaux GNSS intermédiaires soient hors bande de réception d'un récepteur GNSS.

5. Système de positionnement le long d'au moins un câble rayonnant selon la revendication 1, **caractérisé en ce que** les premiers moyens d'injection comprennent un premier coupleur directionnel dont l'entrée est connectée aux moyens de génération, une première sortie du premier coupleur étant connectée à la première extrémité du câble et sa seconde sortie étant fermée sur une charge adaptée, et que les seconds moyens d'injection comprennent un second coupleur directionnel dont l'entrée est connectée aux moyens de génération, une première sortie du second coupleur étant connectée à la seconde extrémité du câble et sa seconde sortie étant fermée sur une charge adaptée.

6. Système de positionnement le long d'au moins un câble rayonnant selon l'une des revendications précédentes, **caractérisé en ce que** le câble rayonnant est rectiligne.

7. Système de positionnement le long d'au moins un câble rayonnant selon la revendication 6, **caractérisé en ce que** le demi-angle d'ouverture des premier et second cônes de visibilité est inférieur à 90°, voire à 60° ou encore 30°.

8. Méthode de positionnement d'un récepteur le long d'au moins un câble rayonnant, ladite méthode étant **caractérisée en ce qu'**elle comprend :

- une étape de génération de premiers et de seconds signaux GNSS, les premiers signaux GNSS étant définis comme ceux qui seraient reçus au même instant en un premier point (A'), dans une configuration de ciel ouvert, d'un premier ensemble ($S_1$) de satellites visibles d'une première extrémité du câble dans un premier cône de visibilité ($C_1$) autour dudit axe et dirigé vers le côté opposé à la première extrémité, les seconds signaux GNSS étant définis comme ceux qui seraient reçus au même instant, en un second point (B') dans une configuration de ciel ouvert, d'un second ensemble ($S_2$) de satellites visibles de la seconde extrémité du câble dans un second cône de visibilité ($C_2$) autour d'un axe reliant les deux extrémités du câble et dirigé du côté opposé à la première extrémité, les premier et second cônes de visibilité ayant une intersection vide, les premier et second ensembles de satellites étant non-vides, le premier point étant situé sur ledit axe, au-delà de la première extrémité et à une distance $\Delta$ de celle-ci, dans la direction opposée à la seconde extrémité, le second point étant situé sur ledit axe, au-delà de la seconde extrémité et à la distance $\Delta$ de celle-ci, dans la direction opposée à la première extrémité, avec $\Delta = \dfrac{\ell}{2}\left(\dfrac{c}{v}-1\right)$ où $\ell$ est la longueur du câble rayonnant, v et c sont respectivement la vitesse de propagation des ondes électromagnétiques dans le câble rayonnant et dans le vide ;
- une étape d'injection des premiers signaux GNSS à la première extrémité du câble rayonnant;
- une étape d'injection des seconds signaux GNSS à la seconde extrémité du câble rayonnant.

9. Méthode de positionnement le long d'au moins un câble rayonnant selon la revendication 8, **caractérisée** en qu'elle comprend en outre :

- une première étape de translation de fréquence des seconds signaux GNSS au moyen d'un premier décalage en fréquence pour fournir des signaux GNSS intermédiaires, les signaux intermédiaires étant injectés avec les premiers signaux à la première extrémité et se propageant de la première à la seconde extrémité du câble rayonnant ;
- une seconde étape de translation en fréquence au moyen d'un second décalage en fréquence, inverse du premier, de manière à régénérer les seconds signaux GNSS avant de les injecter à la seconde extrémité du câble rayonnant.

10. Méthode de positionnement le long d'au moins un câble rayonnant selon la revendication 8 ou 9, **caractérisée en ce que** la génération des premiers et seconds signaux GNSS comprend :

- la configuration (410) du système de positionnement au moyen d'un fichier de configuration, ledit fichier de configuration comprenant les coordonnées des premier et second points, les masques de visibilité définissant les premier et second cônes de visibilité, ainsi que la constellation de satellites utilisée ;
- le calcul (420) des paramètres des orbites des satellites de la constellation identifiée dans le fichier de configuration et la sélection des premier et second ensembles de satellites au sein de la constellation identifiée, à partir des premier et second cônes de visibilité ;
- le calcul (430) des paramètres des premiers signaux GNSS reçus au premier point des satellites appartenant au premier ensemble et des seconds signaux GNSS reçus au second point des satellites appartenant au second ensemble ;

- la génération (443) des séquences pseudo-aléatoires des satellites appartenant aux premier et second ensembles à partir d'une horloge de synchronisation externe ainsi que la génération (445) des messages de navigation de ces satellites à partir de données de navigation ;
- la génération (447) des premiers et seconds signaux GNSS en combinant les séquences pseudo-aléatoires aux bits des messages de navigation, et en modulant au moins une porteuse au moyen des séquences ainsi combinées.

**Patentansprüche**

1. System zum Positionieren entlang mindestens eines strahlenden Kabels, wobei das System (100) **dadurch gekennzeichnet ist, dass** es neben dem strahlenden Kabel (110, 510) aufweist:

   - Mittel (120, 520) zum Erzeugen von ersten und zweiten GNSS-Signalen, wobei die ersten GNSS-Signale als diejenigen definiert sind, die zur gleichen Zeit an einem ersten Punkt ($A'$) in einer Open-Sky-Konfiguration von einer ersten Gruppe ($S_1$) von Satelliten empfangen werden, die von einem ersten Ende des Kabels in einem ersten Sichtbarkeitskegel ($C_1$) um eine Achse sichtbar sind, die das erste und das zweite Ende des Kabels verbindet und auf die dem zweiten Ende gegenüberliegende Seite gerichtet ist, wobei die zweiten GNSS-Signale als diejenigen definiert sind, die zur gleichen Zeit an einem zweiten Punkt ($B'$) in einer Open-Sky-Konfiguration von einem zweiten Satz ($S_2$) von Satelliten empfangen werden, die vom zweiten Ende des Kabels in einem zweiten Sichtbarkeitskegel ($C_2$) um die genannte Achse sichtbar sind und auf die dem ersten Ende gegenüberliegende Seite gerichtet sind, wobei der erste und der zweite Sichtbarkeitskegel keinen Schnittpunkt haben, wobei die erste und die zweite Gruppe von Satelliten nicht leer sind, wobei der erste Punkt auf der Achse jenseits des ersten Endes und in einem Abstand Δ von diesem in der Richtung vom zweiten Ende weg liegt, der zweite Punkt auf der Achse jenseits des zweiten Endes und in einem Abstand Δ von diesem in der dem ersten Ende entgegengesetzten Richtung liegt, mit $$\Delta = \frac{\ell}{2}\left(\frac{c}{v} - 1\right)$$, wobei $\ell$ die Länge des strahlenden Kabels ist, v und c jeweils die Ausbreitungsgeschwindigkeit der elektromagnetischen Wellen im strahlenden Kabel und im Vakuum sind;
   - eine erste Einspeiseeinrichtung (531) zum Einspeisen der ersten GNSS-Signale in das erste Ende des strahlenden Kabels;
   - eine zweite Einspeiseeinrichtung (532) zum Einspeisen der zweiten GNSS-Signale in das zweite Ende des strahlenden Kabels.

2. System zum Positionieren entlang mindestens eines strahlenden Kabels nach Anspruch 1, **dadurch gekennzeichnet, dass** es ferner erste Frequenzumsetzungsmittel (541) aufweist, die derart ausgebildet sind, dass sie die zweiten GNSS-Signale um eine erste Frequenzverschiebung frequenzumsetzen, um Zwischen-GNSS-Signale zu erzeugen, wobei die Zwischensignale mit den ersten GNSS-Signalen durch die ersten Einspeiseeinrichtungen eingespeist werden und sich vom ersten zum zweiten Ende des Kabels ausbreiten, wobei das Positionierungssystem ferner zweite Frequenzumsetzungsmittel (542) aufweist, die derart ausgebildet sind, dass sie die Zwischen-GNSS-Signale um einen zweiten, zum ersten inversen Frequenzversatz frequenzumsetzen, um die zweiten GNSS-Signale zu erzeugen und sie an die zweiten Einspeiseeinrichtungen zu liefern.

3. System zum Positionieren entlang mindestens eines Kabels nach Anspruch 2, **dadurch gekennzeichnet, dass** die Frequenzverschiebung so gewählt wird, dass die GNSS-Zwischensignale außerhalb des Strahlungsbandes des Kabels liegen.

4. System zum Positionieren entlang mindestens eines Kabels nach Anspruch 2, **dadurch gekennzeichnet, dass** die Frequenzverschiebung so gewählt wird, dass die GNSS-Zwischensignale außerhalb des Empfangsbandes eines GNSS-Empfängers liegen.

5. System zum Positionieren entlang mindestens eines strahlenden Kabels nach Anspruch 1, **dadurch gekennzeichnet, dass** die ersten Einspeiseeinrichtungen einen ersten Richtkoppler aufweisen, dessen Eingang mit den Mitteln zum Erzeugen verbunden ist, wobei ein erster Ausgang des ersten Kopplers mit dem ersten Ende des Kabels verbunden ist und ein zweiter Ausgang mit einer angepasste Last verbunden ist, und dass die zweiten Einspeiseeinrichtungen einen zweiten Richtkoppler aufweisen, dessen Eingang mit den Mitteln zum Erzeugen verbunden ist, wobei ein erster Ausgang des zweiten Kopplers mit dem zweiten Ende des Kabels verbunden ist und ein zweiter Ausgang mit einer angepassten Last verbunden ist.

6. System zum Positionieren entlang mindestens eines strahlenden Kabels nach einem der vorhergehenden Ansprüche, **dadurch gekennzeichnet, dass** das strahlende Kabel geradlinig ist.

7. System zum Positionieren entlang mindestens eines strahlenden Kabels nach Anspruch 6, **dadurch gekennzeichnet, dass** der halbe Öffnungswinkel des ersten und zweiten Sichtbarkeitskegels kleiner als 90°, bzw. 60° oder 30° ist.

8. Verfahren zum Positionieren eines Empfängers entlang mindestens eines strahlenden Kabels, wobei das Verfahren **dadurch gekennzeichnet ist, dass** es aufweist:

- einen Schritt zum Erzeugen von ersten und zweiten GNSS-Signalen, wobei die ersten GNSS-Signale als diejenigen definiert sind, die zur gleichen Zeit an einem ersten Punkt (A') in einer Open-Sky-Konfiguration von einer ersten Gruppe ($S_1$) von Satelliten empfangen werden, die von einem ersten Ende des Kabels in einem ersten Sichtbarkeitskegel ($C_1$) um die Achse sichtbar sind und auf die dem ersten Ende gegenüberliegende Seite gerichtet sind, wobei die zweiten GNSS-Signale als diejenigen definiert sind, die zur gleichen Zeit an einem zweiten Punkt (B') in einer Open-Sky-Konfiguration von einem zweiten Satz ($S_2$) von Satelliten empfangen werden, die vom zweiten Ende des Kabels in einem zweiten Sichtbarkeitskegel ($C_2$) um eine Achse sichtbar sind, die die beiden Enden des Kabels verbindet und auf die dem ersten Ende gegenüberliegende Seite gerichtet ist, wobei der erste und der zweite Sichtbarkeitskegel keinen Schnittpunkt haben, die erste und die zweite Gruppe von Satelliten nicht leer sind, der erste Punkt auf der Achse liegt, jenseits des ersten Endes und in einem Abstand $\Delta$ von diesem in der vom zweiten Ende abgewandten Richtung, der zweite Punkt auf der Achse liegt, jenseits des zweiten Endes und in einem Abstand $\Delta$ von diesem in der dem ersten Ende entgegengesetzten

Richtung, mit $\Delta = \dfrac{\ell}{2}\left(\dfrac{c}{v} - 1\right)$, wobei $\ell$ die Länge des strahlenden Kabels ist, v und c jeweils die Ausbreitungsgeschwindigkeit der elektromagnetischen Wellen im strahlenden Kabel bzw. im Vakuum sind;
- einen Schritt des Einspeisens der ersten GNSS-Signale in das erste Ende des strahlenden Kabels;
- einen Schritt des Einspeisens der zweiten GNSS-Signale in das zweite Ende des strahlenden Kabels.

9. Verfahren zum Positionieren entlang mindestens eines strahlenden Kabels nach Anspruch 8, **dadurch gekennzeichnet, dass** es weiterhin aufweist:

- einen ersten Schritt des Umsetzens der Frequenz der zweiten GNSS-Signale mittels einer ersten Frequenzverschiebung, um Zwischen-GNSS-Signale bereitzustellen, wobei die Zwischensignale mit den ersten Signalen am ersten Ende eingespeist werden und sich vom ersten zum zweiten Ende des strahlenden Kabels ausbreiten;
- einen zweiten Schritt der Frequenzumsetzung mittels einer zweiten Frequenzverschiebung, die zur ersten invertiert ist, derart, dass die zweiten GNSS-Signale vor dem Einspeisen in das zweite Ende des strahlenden Kabels erzeugt werden.

10. Verfahren zum Positionieren entlang mindestens eines strahlenden Kabels nach Anspruch 8 oder 9, **dadurch gekennzeichnet, dass** die Erzeugung des ersten und zweiten GNSS-Signals aufweist:

- Konfigurieren (410) des Positionierungssystems mit Hilfe einer Konfigurationsdatei, wobei die Konfigurationsdatei die Koordinaten des ersten und zweiten Punktes, die Sichtbarkeitsmasken, die den ersten und zweiten Sichtbarkeitskegel definieren, sowie die verwendete Satellitenkonstellation aufweist;
- Berechnen (420) der Parameter der Umlaufbahnen der Satelliten der identifizierten Konstellation in der Konfigurationsdatei und Auswählen des ersten und zweiten Satzes von Satelliten innerhalb der identifizierten Konstellation anhand des ersten und zweiten Sichtbarkeitskegels;
- Berechnen (430) der Parameter der ersten GNSS-Signale, die an dem ersten Punkt von den Satelliten empfangen werden, die zu dem ersten Satz gehören, und der zweiten GNSS-Signale, die an dem zweiten Punkt von den Satelliten empfangen werden, die zu dem zweiten Satz gehören;
- Erzeugen (443) der Pseudozufallssequenzen der Satelliten, die zum ersten und zweiten Satz gehören, aus einem externen Synchronisationsuhrwerk sowie Erzeugen (445) der Navigationsnachrichten dieser Satelliten aus Navigationsdaten ;
- Erzeugen (447) der ersten und zweiten GNSS-Signale durch Kombinieren der Pseudozufallssequenzen mit den Bits der Navigationsnachrichten und Modulieren mindestens eines Trägers mittels der so kombinierten Sequenzen.

**Claims**

1. Positioning system along the length at least one radiating cable, said system (100) being **characterised in that** it comprises the following in addition to said radiating cable (110, 510):

   - generating means (120, 520) for generating first and second GNSS signals, the first GNSS signals being defined as signals that would be received at the same instant at a first point ($A'$) in an open sky configuration from a first set ($S_1$) of satellites visible from a first end of the cable in a first visibility cone ($C_1$) around an axis connecting the first and second ends of the cable and along the direction towards the end opposite to the second end, the second GNSS signals being defined as signals that would be received at the same instant at a second point ($B'$) in an open sky configuration from a second set ($S_2$) of satellites visible from the second end of the cable in a second visibility cone ($C_2$) around said axis and along the direction towards the end opposite to the first end, the first and second visibility cones having an empty intersection, said first and second sets of satellites being not empty, the first point being located on said axis, beyond the first end and at a distance $\Delta$ from it along the direction opposite the second end, the second point being located on said axis, beyond the second end and

   at a distance $\Delta$ from it along the direction opposite the first end, with $\Delta = \dfrac{\ell}{2}\left(\dfrac{c}{v} - 1\right)$ in which $\ell$ is the length of the radiating cable, $v$ and $c$ are the propagation speeds of electromagnetic waves in the radiating cable and in a vacuum respectively;
   - first injection means (531) to inject the first GNSS signals into the first end of the radiating cable;
   - second injection means (532) to inject the second GNSS signals into the second end of the radiating cable.

2. Positioning system along at least one radiating cable according to claim 1, **characterised in that** it also comprises first frequency translation means (541) adapted to translating the second GNSS signals in frequency by a first frequency shift to obtain intermediate GNSS signals, the intermediate signals being injected with the first GNSS signals by the first injection means and propagating from the first end to the second end of the cable, the positioning system also comprising second frequency translation means (542) adapted to translate intermediate GNSS signals by a second frequency shift inverse of the first, so as to regenerate the second GNSS signals and supply them to the second injection means.

3. Positioning system along at least one cable according to claim 2, **characterised in that** the frequency shift is chosen such that the intermediate GNSS signals are outside the radiation band of said cable.

4. Positioning system along at least one cable according to claim 2, **characterised in that** the frequency shift is chosen such that the intermediate GNSS signals are outside the reception band of a GNSS receiver.

5. Positioning system along at least one radiating cable according to claim 1, **characterised in that** the first injection means comprise a first directional coupler, the input of which is connected to the generation means, a first output of the first coupler is connected to the first end of the cable and its second output is closed on a matched load, and **in that** the second injection means comprise a second directional coupler, the input of which is connected to the generation means, a first output of the second coupler is connected to the second end of the cable and its second output is closed on a matched load.

6. Positioning system along at least one radiating cable according to one of the previous claims, **characterised in that** the radiating cable is straight.

7. Positioning system along at least one radiating cable according to claim 6, **characterised in that** the half opening angle of the first and second visibility cones is less than 90°, or less than 60° or even less than 30°.

8. Method of positioning a receiver along the length of at least one radiating cable, said method being **characterised in that** it comprises:

- a generating step to generate first and second GNSS signals, the first GNSS signals being defined as signals that would be received at the same instant at a first point (A'), in an open sky configuration, from a first set ($S_1$) of satellites visible from a first end of the cable in a first visibility cone ($C_1$) around said axis and directed towards the end opposite the first end, the second GNSS signals being defined as signals that would be received at the same instant at a second point (B') in an open sky configuration, from a second set ($S_2$) of satellites visible from the second end of the cable in a second visibility cone ($C_2$) around an axis connecting the two ends of the cable and directed towards the end opposite the first end, the first and the second visibility cones having an empty intersection, the first and second sets of satellites not being empty;
- a first injecting step to inject the first GNSS signals into the first end of the radiating cable;
- a second injecting step to inject the second GNSS signals into the second end of the radiating cable.

9. Method of positioning along the length of at least one radiating cable according to claim 8, **characterised in that** it also comprises:

- a first translating step to translate the frequency of the second GNSS signals making use of a first frequency shift to supply intermediate GNSS signals, the intermediate signals being injected with the first signals at the first end and propagating from the first end to the second end of the radiating cable;
- a second translating step to translate the frequency making use of a second frequency shift inverse of the first, so as to regenerate the second GNSS signals before injecting them into the second end of the radiating cable.

10. Method of positioning along the length of at least one radiating cable according to claim 8 or 9, **characterised in that** generation of the first and second GNSS signals comprises:

- configuration (410) of the positioning system using a configuration file, said configuration file including the coordinates of the first and second points, the visibility masks defining the first and second visibility cones, and the constellation of satellites used;
- calculation (420) of orbit parameters of satellites in the constellation identified in the configuration file and selection of the first and second sets of satellites within the identified constellation, starting from the first and second visibility cones;
- calculation (430) of parameters of the first GNSS signals received at the first point from satellites belonging to the first set and second GNSS signals received at the second point from satellites belonging to the second set;
- generation (443) of pseudo-random sequences from satellites belonging to the first and second sets from an external synchronisation clock and generation (445) of navigation messages from these satellites starting from the navigation data;
- generation (447) of first and second GNSS signals by combining pseudo-random sequences with bits of navigation messages, and by modulating at least one carrier by means of the sequences thus combined.

FIG.1

FIG.2

FIG.3

Config _file

configuration du système
de positionnement — 410

calcul des paramètres des orbites
des satellites
sélection de $S_1$ dans $C_1$
sélection de $S_2$ dans $C_2$ — 420

calcul des paramètres des
premiers et des seconds signaux
GNSS — 430

443

447

445

GPS _sync

génération des
PRN

génération des premiers
et seconds signaux GNSS

génération du
message de
navigation

Nav_ data

moyens d'injection

FIG.4

FIG.5A

EP 3 698 173 B1

FIG.5B

EP 3 698 173 B1

FIG.6

EP 3 698 173 B1

**EP 3 698 173 B1**

**Documents brevets cités dans la description**

- US 2006208946 A